(19) Europäisches Patentamt / European Patent Office / Office européen des brevets

(11) **EP 4 779 358 A1**

(12) **EUROPEAN PATENT APPLICATION**

(43) Date of publication:
**22.07.2026 Bulletin 2026/30**

(21) Application number: **25208525.3**

(22) Date of filing: **14.10.2025**

(51) International Patent Classification (IPC):
**G01S 17/88** (2006.01)   **G01S 17/08** (2006.01)
**G01S 17/86** (2020.01)   **G01S 7/48** (2006.01)
**A63B 57/00** (2015.01)   **G01C 15/00** (2006.01)
**A63B 69/36** (2006.01)   **G01C 17/38** (2006.01)

(52) Cooperative Patent Classification (CPC):
**G01S 17/08; G01C 15/002; G01S 7/4808;
G01S 17/86; G01S 17/88**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.01.2025 CN 202510061993**

(71) Applicant: **Sndway Technology (Guangdong) Co.,
Ltd.
Dongguan Guangdong (CN)**

(72) Inventors:
• **Luo, Bin**
  **Humen Town, Dongguan,
  Guangdong (CN)**
• **He, Gang**
  **Humen Town, Dongguan,
  Guangdong (CN)**

(74) Representative: **Herrero & Asociados, S.L.
Edificio Aqua - Calle Agustín de Foxá, 4-10, 2oA
28036 Madrid (ES)**

(54) **METHOD, SYSTEM, AND DEVICE FOR FLAGSTICK POSITIONING BASED ON LASER RANGEFINDER TELESCOPE**

(57)    The invention relates to a method, a system and a device for flagstick positioning based on a laser rangefinder telescope. The method includes: obtaining, in response to the laser rangefinder telescope is rotated such that a ranging light emitted by the laser rangefinder telescope is aligned with a flagstick, rotation information and position information of the laser rangefinder telescope, and analyzing the ranging light to obtain a distance between the laser rangefinder telescope and the flagstick; correcting, according to the rotation information of the laser rangefinder telescope and the distance, a magnetic declination of the flagstick obtained at a same moment of obtaining the distance to obtain a first corrected magnetic declination; correcting, according to the rotation information of the laser rangefinder telescope in combination with a preset linear model of rotation acceleration versus magnetic declination offset angle, the magnetic declination of the flagstick to obtain a second corrected magnetic declination; and performing, according to the position information of the laser rangefinder telescope, the distance, the first corrected magnetic declination and the second corrected magnetic declination, a positioning analysis on the flagstick to obtain position information of the flagstick. The invention improves the efficiency, convenience, and accuracy of flagstick positioning.

rotation information and position information of the laser rangefinder telescope are obtained in response to the laser rangefinder telescope is rotated such that a ranging light emitted by the laser rangefinder telescope is aligned with a flagstick, and the ranging light is analyzed to obtain a distance between the laser rangefinder telescope and the flagstick — S100

according to the rotation information of the laser rangefinder telescope and the distance, a magnetic declination of the flagstick obtained at a same moment of obtaining the distance is corrected to obtain a first corrected magnetic declination — S200

according to the rotation information of the laser rangefinder telescope in combination with a preset linear model of rotation acceleration versus magnetic declination offset angle, the magnetic declination of the flagstick is corrected to obtain a second corrected magnetic declination — S300

according to the position information of the laser rangefinder telescope, the distance, the first corrected magnetic declination and the second corrected magnetic declination, a positioning analysis is performed on the flagstick to obtain position information of the flagstick — S400

FIG. 1

EP 4 779 358 A1

## Description

TECHNICAL FIELD

The invention relates to the field of flagstick positioning technologies, and more particularly to a method, a system, and a device for flagstick positioning based on a laser rangefinder telescope.

BACKGROUND

In the sport of golf, to mark a position of a golf hole, a flagstick is required to be placed beside the golf hole. Before a golfer hits a golf ball into the golf hole, in order to more accurately control the swing strength, the golfer needs to accurately obtain/acquire position information and distance information of the golf hole or the flagstick to judge the swing strength based on the position and the distance of the golf hole.

At present, in the related art, the position information and the distance information of the golf hole or the flagstick are mainly obtained by using a laser rangefinder telescope to lock onto the flagstick first, and then measuring the distance from current position to the flagstick, thereby obtaining the distance from the current position to the golf hole; and obtaining current geographical location by the laser rangefinder telescope provided with a global positioning system (GPS) module, and then combining the current geographical location with golf course map information to calculate and obtain the position of the flagstick or the golf hole. However, the above method relies on the golf course map information to function, resulting in a complex calculation process, inconvenient usage, and low efficiency in positioning of the flagstick.

Therefore, those skilled in the art urgently need a technical solution that enables efficient and accurate/precise positioning of the flagstick using a laser rangefinder telescope.

SUMMARY

1. The technical problems to be solved.

In response to the above shortcomings and deficiencies in the related art, the invention provides a method, system and a device for flagstick positioning based on a laser rangefinder telescope, which solves the technical problems of complex and inefficient flagstick positioning process.

2. Technical solutions.

In order to achieve the above purpose, the technical solutions adopted by the invention are mainly as follows.

In a first aspect, an embodiment of the invention provides a method for flagstick positioning based on a laser rangefinder telescope, including:

obtaining, in response to the laser rangefinder telescope is rotated such that a ranging light emitted by the laser rangefinder telescope is aligned with a flagstick, rotation information and position information of the laser rangefinder telescope, and analyzing the ranging light to obtain a distance between the laser rangefinder telescope and the flagstick;
correcting, according to the rotation information of the laser rangefinder telescope and the distance, a magnetic declination of the flagstick obtained at a same moment of obtaining the distance to thereby obtain a first corrected magnetic declination;
correcting, according to the rotation information of the laser rangefinder telescope in combination with a preset linear model of rotation acceleration versus magnetic declination offset angle, the magnetic declination of the flagstick to thereby obtain a second corrected magnetic declination; and
performing, according to the position information of the laser rangefinder telescope, the distance, the first corrected magnetic declination and the second corrected magnetic declination, a positioning analysis on the flagstick to thereby obtain position information of the flagstick.

In an embodiment, the obtaining, in response to the laser rangefinder telescope is rotated such that a ranging light emitted by the laser rangefinder telescope is aligned with a flagstick, rotation information and position information of the laser rangefinder telescope, and the analyzing the ranging light to obtain a distance between the laser rangefinder telescope and the flagstick include:

obtaining rotation information comprising a rotation time, a rotation angular velocity and a rotation acceleration, and position information of the laser rangefinder telescope, in response to the laser rangefinder telescope is rotated such that the ranging light emitted by the laser rangefinder telescope is aligned with the flagstick,
obtaining ranging data fed back by the ranging light at each of moments during rotating of the laser rangefinder telescope; and
determining, in response to a difference between the ranging data at adjacent two of the moments is greater than a preset threshold, the ranging data at a latter moment of the adjacent two of the moments as the distance between the laser rangefinder telescope and the flagstick.

In an embodiment, the determining, in response to a difference between the ranging data at adjacent two of the moments is greater than a preset threshold, the ranging data at a latter moment of the adjacent two of the moments as the distance between the laser rangefinder telescope and the flagstick includes:

judging whether the difference between the ranging data at the adjacent two of the moments is greater than the preset threshold; and

outputting a prompt signal indicating the laser rangefinder telescope continues rotating, when the difference between the ranging data at the adjacent two of the moments is not greater than the preset threshold,

determining the ranging data at the latter moment as the distance between the laser rangefinder telescope and the flagstick and outputting a prompt signal indicating the laser rangefinder telescope stops rotating, when the difference between the ranging data at the adjacent two of the moments is greater than the preset threshold.

In an embodiment, the correcting, according to the rotation information of the laser rangefinder telescope and the distance, a magnetic declination of the flagstick obtained at a same moment of obtaining the distance to thereby obtain a first corrected magnetic declination includes:

obtaining the magnetic declination of the flagstick at the same moment of obtaining the distance by the laser rangefinder telescope;
performing linear velocity calculation according to the distance and a rotation angular velocity of the rotation information of the laser rangefinder telescope, to obtain a linear velocity of the ranging light at the flagstick;
performing displacement calculation according to the linear velocity, and time information of the laser rangefinder telescope obtaining the distance, to obtain a displacement of the ranging light scanned at the flagstick during a time period corresponding to the time information;
obtaining, according to the displacement of the ranging light and the distance, in combination with a tangent triangle function calculation formula, a first magnetic declination offset angle generated by the laser rangefinder telescope during rotating for ranging; and
correcting, according to the first magnetic declination offset angle, the magnetic declination of the flagstick to obtain the first corrected magnetic declination.

In an embodiment, before the correcting, according to the rotation information of the laser rangefinder telescope in combination with a preset linear model of rotation acceleration versus magnetic declination offset angle, the magnetic declination of the flagstick to thereby obtain a second corrected magnetic declination, the method further includes:

establishing a test database to store multiple measurement data of the laser rangefinder telescope at a same geographical location under a rotating condition and a non-rotating condition, where the multiple measurement data include: a first magnetic declination obtained when obtaining a distance to the flagstick by the laser rangefinder telescope of which a ranging light is aligned with the flagstick and not rotated, and multiple second magnetic declinations obtained when obtaining distances to the flagstick by the laser rangefinder telescope at different rotation accelerations and a same rotation time; and

calculating a difference between the first magnetic declination and the second magnetic declination at each of the different rotation accelerations within the same rotation time to thereby obtain magnetic declination offset angles, performing linear fitting on the magnetic declination offset angles and corresponding ones of the different rotation accelerations to obtain the preset linear model of rotation acceleration versus magnetic declination offset angle;

where a mathematical expression for the preset linear model of rotation acceleration versus magnetic declination offset angle is as follows:

$$\theta_2 = 0.2\int a(t)\mathrm{d}t + 0.15$$

where $\theta_2$ represents the magnetic declination offset angle, $a$ represents the rotation acceleration of the laser rangefinder telescope, and t represents the same rotation time.

In an embodiment, the correcting, according to the rotation information of the laser rangefinder telescope in combination with a preset linear model of rotation acceleration versus magnetic declination offset angle, the magnetic declination of the flagstick to thereby obtain a second corrected magnetic declination includes:

acquiring the magnetic declination of the flagstick at the same moment of obtaining the distance by the laser rangefinder telescope;
calling, according to rotation time information of the rotation information, a corresponding linear equation from the preset linear model of rotation acceleration versus magnetic declination offset angle;
calculating, according to a rotation acceleration of the rotation information and the corresponding linear equation, a second magnetic declination offset angle generated by the laser rangefinder telescope during rotating for ranging; and
correcting, according to a rotation direction of the laser rangefinder telescope and the second magnetic declination offset angle, the magnetic declination of the flagstick to obtain the second corrected magnetic declination.

In an embodiment, the performing, according to the position information of the laser rangefinder telescope, the distance, the first corrected magnetic declination and the second corrected magnetic declination, a positioning analysis on the flagstick to thereby obtain position information of the flagstick includes:

> performing mean calculation on the first corrected magnetic declination and the second corrected magnetic declination to obtain an optimal magnetic declination of the flagstick;
> obtaining, according to the optimal magnetic declination of the flagstick, the distance and the position information of the laser rangefinder telescope, in combination with a flagstick position calculation formula, the position information of the flagstick;
> where the flagstick position calculation formula is as follows:

$$\begin{cases} X = \dfrac{L_0 * \sin A * 360^\circ}{2\pi * ARC * \cos Y_0} + X_0 \\ Y = \dfrac{L_0 * \cos A * 360^\circ}{2\pi * ARC} + Y_0 \end{cases}$$

> where X represents a longitude value of the flagstick, Y represents a latitude value of the flagstick, $X_0$ represents a longitude value of the laser rangefinder telescope, $Y_0$ represents a latitude value of the laser rangefinder telescope, $L_0$ represents the distance between the laser rangefinder telescope and the flagstick, A represents the optimal magnetic declination of the flagstick, and ARC represents an earth radius.

In a second aspect, an embodiment of the invention provides a system for flagstick positioning based on a laser rangefinder telescope. The system includes: a data acquisition module, a first magnetic declination correction module, a second magnetic declination correction module, and a flagstick positioning module.

The data acquisition module is configured to obtain, in response to the laser rangefinder telescope is rotated such that a ranging light emitted by the laser rangefinder telescope is aligned with a flagstick, rotation information and position information of the laser rangefinder telescope, and analyze the ranging light to obtain a distance between the laser rangefinder telescope and the flagstick.

The first magnetic declination correction module is configured to correct, according to the rotation information of the laser rangefinder telescope and the distance, a magnetic declination of the flagstick obtained at a same moment of obtaining the distance to thereby obtain a first corrected magnetic declination.

The second magnetic declination correction module is configured to correct, according to the rotation information of the laser rangefinder telescope in combination with a preset linear model of rotation acceleration versus magnetic declination offset angle, the magnetic declination of the flagstick to thereby obtain a second corrected magnetic declination.

The flagstick positioning module is configured to perform, according to the position information of the laser rangefinder telescope, the distance, the first corrected magnetic declination and the second corrected magnetic declination, a positioning analysis on the flagstick to thereby obtain position information of the flagstick.

In a third aspect, an embodiment of the invention provides a flagstick positioning device, including: a rotation bracket, a laser rangefinder telescope mounted on the rotation bracket, and a controller connected to the rotation bracket and the laser rangefinder telescope. The rotation bracket is configured to drive the laser rangefinder telescope to rotate. The controller is configured to perform the method for flagstick positioning based on the laser rangefinder telescope.

In an embodiment, the laser rangefinder telescope includes: a locator, a geomagnetic module, a gyroscope, an accelerometer, a timer, and a laser rangefinder. The locator is configured to measure the position information of the laser rangefinder telescope. The geomagnetic module is configured to measure the magnetic declination of the flagstick. The gyroscope is configured to measure a rotation angular velocity of the laser rangefinder telescope. The accelerometer is configured to measure a rotation acceleration of the laser rangefinder telescope. The timer is configured to collect a rotation time of the laser rangefinder telescope. The laser rangefinder is configured to emit and receive the ranging light to measure the distance between the laser rangefinder telescope and the flagstick.

3. Beneficial effects.

The beneficial effects of the invention are as follows: the method for flagstick positioning based on the laser rangefinder telescope proposed in the invention includes: rotating the laser rangefinder telescope to capture the flagstick and then performing the position analysis on the flagstick position using ranging data, rotation data, position data, and magnetic declination data collected during the rotation of the laser rangefinder telescope. In this way, compared with the related art, the method does not require map information at the flagstick to calculate the flagstick position, and all data are obtained directly through the laser rangefinder telescope without the need for additional equipment, which enhances the efficiency and user-friendliness of flagstick positioning.

Meanwhile, the invention corrects the real-time magnetic declination of the laser rangefinder telescope by two magnetic declination correction methods based on the distance between the laser rangefinder telescope and the flagstick, and the rotation data of the laser rangefinder telescope. This corrects the magnetic declination offset angles generated when the laser rangefinder telescope measures the distance to the flagstick, enhancing the accuracy of the magnetic declination, thereby improving the precision of flagstick positioning.

BRIEF DESCRIPTION OF DRAWINGS

FIG. 1 illustrates a schematic flowchart diagram of a method for flagstick positioning based on a laser rangefinder telescope according to an embodiment of the invention.
FIG. 2 illustrates a diagram of an actual field of view in a lens of the laser rangefinder telescope during rotating and ranging according to the embodiment of the invention.
FIG. 3 illustrates a diagram of an ideal field of view in the lens of the laser rangefinder telescope during the rotating and ranging according to the embodiment of the invention.
FIG. 4 illustrates a schematic rotation diagram of the laser rangefinder telescope during the rotating and ranging according to the embodiment of the invention.

Description of reference signs: 1: laser rangefinder telescope; 2: flagstick.

DETAILED DESCRIPTION OF EMBODIMENTS

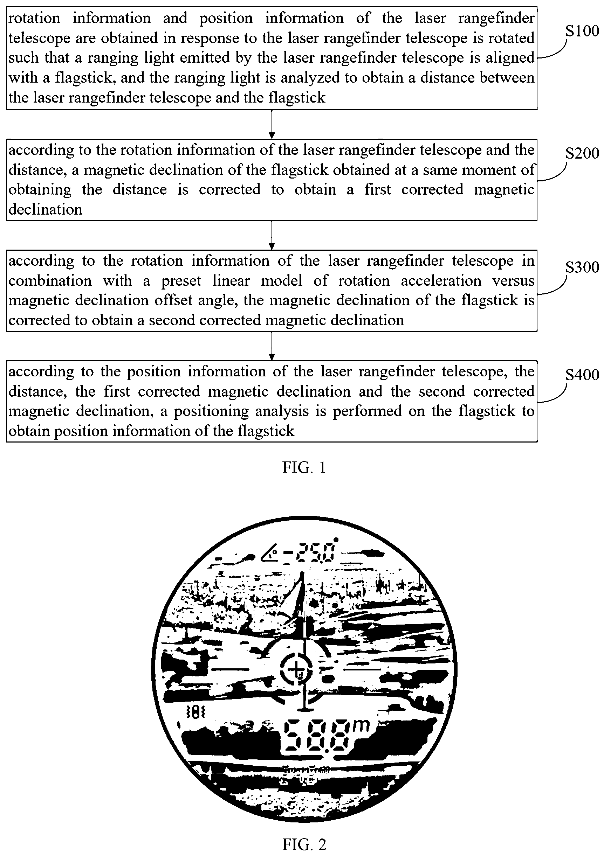

In order to better explain the invention and facilitate understanding, the invention will be described in detail through specific embodiments in conjunction with the accompanying drawings.
Referring to FIGS. 1-4, an embodiment of the invention provides a method for flagstick positioning based on a laser rangefinder telescope 1, including: obtaining, in response to the laser rangefinder telescope 1 is rotated such that a ranging light emitted by the laser rangefinder telescope 1 is aligned with a flagstick, rotation information and position information of the laser rangefinder telescope 1, and analyzing the ranging light to obtain a distance between the laser rangefinder telescope 1 and the flagstick 2; correcting, according to the rotation information of the laser rangefinder telescope 1 and the distance, a magnetic declination of the flagstick 2 obtained at a same moment of obtaining the distance to obtain a first corrected magnetic declination; correcting, according to the rotation information of the laser rangefinder telescope 1 in combination with a preset linear model of rotation acceleration versus magnetic declination offset angle, the magnetic declination of the flagstick 2 to obtain a second corrected magnetic declination; and performing, according to the position information of the laser rangefinder telescope 1, the distance, the first corrected magnetic declination and the second corrected magnetic declination, a positioning analysis on the flagstick 2 to obtain position information of the flagstick 2.
In the embodiment, the method includes: rotating the laser rangefinder telescope 1 to capture the flagstick 2 and then performing position analysis on the flagstick position using ranging data, rotation data, position data, and magnetic declination data collected during the rotation of the laser rangefinder telescope 1. In this way, compared with the related art, the method does not require map information at the flagstick 2 to calculate the flagstick position, and all data are obtained directly through the laser rangefinder telescope 1 without the need for additional equipment, which enhances the efficiency and user-friendliness of flagstick positioning.
Meanwhile, the invention corrects the real-time magnetic declination of the laser rangefinder telescope 1 by two magnetic declination correction methods based on the distance between the laser rangefinder telescope 1 and the flagstick 2, and the rotation data of the laser rangefinder telescope 1. This corrects the magnetic declination offset angles generated when the laser rangefinder telescope 1 measures the distance to the flagstick, enhancing the accuracy of the magnetic declination, thereby improving the precision of flagstick positioning.
In order to better understand the above technical solutions, the exemplary embodiment of the invention will be described in more detail below with reference to the accompanying drawings. Although the exemplary embodiment of the invention is shown in the accompanying drawings, it should be understood that the invention may be implemented in various forms and should not be limited by the embodiments described herein. On the contrary, these embodiments are provided to enable a clearer and more thorough understanding of the invention, and to fully convey the scope of the invention to those skilled in the art.
As shown in FIG. 1, the embodiment provides a method for flagstick positioning based on a laser rangefinder telescope 1. The method includes the following steps S100-S400.
S100, rotation information and position information of the laser rangefinder telescope 1 are obtained in response to the laser rangefinder telescope is rotated such that a ranging light emitted by the laser rangefinder telescope is aligned with a flagstick, and the ranging light is analyzed to obtain a distance between the laser rangefinder telescope 1 and the flagstick 2.
In the embodiment, when initiating the laser rangefinder telescope 1 to measure the distance to the flagstick 2, it is often difficult for the ranging light of the laser rangefinder telescope 1 to directly hit the flagstick 2. Under normal circumstances, the ranging light usually falls on either side of the flagstick 2. At this point, it is necessary to rotate the laser rangefinder telescope 1 so that the ranging light directly faces the flagstick 2, thereby obtaining the distance data between the laser rangefinder telescope 1 and the flagstick 2 through analyzing the ranging light. However, since the flagstick 2 is often hundreds of meters away from the laser rangefinder telescope 1, it is impossible to accurately capture the position of the flagstick 2 by observing through the lens of the laser rangefinder telescope 1 with the naked eye.

Therefore, the embodiment adopts a method of continuously emitting the ranging light through the laser rangefinder telescope 1 and comparing the ranging data of adjacent two moments, to thereby capture and lock the flagstick 2 based on the comparison results.

For, example, when the flagstick 2 is at a left side of the ranging light emitted by the laser rangefinder telescope 1, first, the laser rangefinder telescope 1 needs to be controlled to rotate from right to left (counterclockwise) to move the ranging light from right to left. During the rotation, the ranging light are continuously emitted to obtain ranging data at each moment. Then, if a change in the ranging data between two adjacent moments exceeds 5 meters or more, or if the ranging data between the two adjacent moments changes from invalid to valid, the ranging information at a latter moment of the two adjacent moments is determined to be the distance between the laser rangefinder telescope 1 and the flagstick 2, and a prompt signal is then issued to stop the rotation of the laser rangefinder telescope 1, thus completing the capture of the flagstick 2 and locking the ranging angle of the laser rangefinder telescope 1. The prompt signal can be a flashing signal light or valid ranging data displayed in the lens of the laser rangefinder telescope 1.

In the embodiment, step S110 may further includes the following sub-steps S110-S130.

S110, the rotation information and the position information of the laser rangefinder telescope 1 are obtained in response to the laser rangefinder telescope 1 is rotated such that the ranging light emitted by the laser rangefinder telescope 1 is aligned with the flagstick 2, where the rotation information of the laser rangefinder telescope 1 includes: a rotation time, a rotation angular velocity, and a rotation acceleration.

S120, ranging data fed back by the ranging light at each of moments during rotating of the laser rangefinder telescope 1 is obtained.

S130, the ranging data at a latter moment of adjacent two of the moments is determined as the distance between the laser rangefinder telescope 1 and the flagstick 2 when a difference between the ranging data at the adjacent two of the moments is greater than a preset threshold.

In an embodiment, step S130 may further includes the following sub-steps S131-S132.

S131, it is judged that whether the difference between the ranging data at the adjacent two of the moments is greater than the preset threshold.

S132a, when the difference between the ranging data at the adjacent two of the moments is not greater than the preset threshold, a prompt signal indicating the laser rangefinder telescope 1 continues rotating is output.

S132b, when the difference between the ranging data at the adjacent two of the moments is greater than the preset threshold, the ranging data at the latter moment is determined as the distance between the laser rangefinder telescope 1 and the flagstick 2, and a prompt signal indicating the laser rangefinder telescope 1 stops rotating is output.

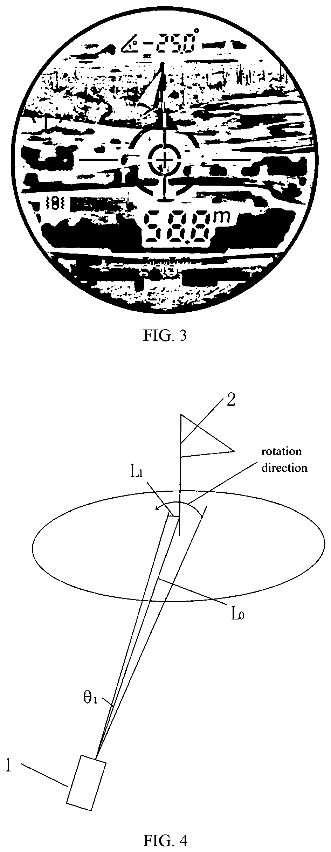

After capturing the flagstick 2 and obtaining the distance data between the laser rangefinder telescope 1 and the flagstick 2, the position information of the flagstick 2 can be calculated using the distance data and the magnetic declination of the flagstick 2 obtained at the same moment of obtaining the measured distance. However, during the flagstick capturing process, when the laser rangefinder telescope 1 locks onto the flagstick 2, the laser rangefinder telescope 1 rotates left and right relative to the flagstick 2, and the ranging is performed while the laser rangefinder telescope 1 is rotating and detects the flagstick 2. Due to the response delay among the various measuring modules in the laser rangefinder telescope 1 and the time difference between the emission and reception of the ranging light, the laser rangefinder telescope 1 continues to rotate during this time difference, and thus the obtained magnetic declination data corresponds to a moment after this time difference, which results in an asynchrony between the flagstick ranging data and the magnetic declination data, leading to measurement errors in the flagstick position. For example, when the ranging laser of the laser rangefinder telescope 1 moves from the right side to the left side of the flagstick 2, the actual angle of view of the lens of the laser rangefinder telescope 1 at the moment that the distance is measured is as shown in FIG. 2. If the magnetic declination of the flagstick 2 is measured at this angle, there will be an angular offset error in the magnetic declination. To correct this angular offset error, the angle of view of the lens of the laser rangefinder telescope 1 needs to be in the ideal measurement state as shown in FIG. 3, so as to obtain accurate offset angle data. Therefore, the embodiment proposes two methods: step S200 and step S300, to correct the offset angle of the magnetic declination caused by the ranging time difference and the device response delay, thereby improving the real-time acquisition of the magnetic declination and reducing the measurement error of the flagstick position.

S200, according to the rotation information of the laser rangefinder telescope 1 and the distance, a magnetic declination of the flagstick 2 obtained at a same moment of obtaining the distance is corrected to obtain a first corrected magnetic declination.

In the embodiment, step S200 may include the following sub-steps S210-S250.

S210, the magnetic declination of the flagstick 2 is obtained at the same moment of obtaining the distance by the laser rangefinder telescope 1.

S220, according to the distance and the rotation angular velocity of the rotation information of the laser rangefinder telescope 1, linear velocity calculation is performed to obtain a linear velocity of the ranging light at the flagstick 2.

Referring to FIG. 4, the laser rangefinder telescope 1 rotates counterclockwise, causing the ranging light emitted by the laser rangefinder telescope 1 to move from the right side of the flagstick 2 to the left side of the flagstick 2. After the laser rangefinder telescope 1 completes the ranging task, it stops rotating and the distance $L_0$ between the laser rangefinder telescope 1 and the flagstick 2 is obtained. Then, by the rotation angular velocity $\omega$ at which the laser rangefinder telescope 1 stops rotating, and in combination with the linear velocity calculation formula (1) as follows, the linear velocity v of the ranging light at the flagstick 2 is calculated.

$$v=\omega L_0 \qquad (1)$$

S230, according to the linear velocity and time information of the laser rangefinder telescope obtaining the distance, displacement calculation is performed to obtain a displacement of the ranging light scanned at the flagstick during a time period corresponding to the time information.

Referring to FIG. 4, based on the distance $L_0$ between the laser rangefinder telescope 1 and the flagstick 2 measured by the laser rangefinder telescope 1, the time $t_0$ taken for the ranging light to travel from emission to reception is calculated using the time calculation formula (2) as follows. Then, by using the linear velocity v of the ranging light at the flagstick 2 obtained in step S220, in combination with the displacement calculation formula (3) as follows, the displacement $L_1$ scanned by the ranging light at the flagstick 2 within the time $t_0$ is calculated.

$$t=2L_0/v \qquad (2)$$

where $V_{light}$ represents a speed of light;

$$L_1=v \times t_0 \qquad (3)$$

S240, according to the displacement of the ranging light and the distance, in combination with a tangent triangle function calculation formula, a first magnetic declination offset angle generated by the laser rangefinder telescope 1 during rotating for ranging is obtained.

Referring to FIG. 4, based on the distance $L_0$ between the laser rangefinder telescope 1 and the flagstick 2 measured by the laser rangefinder telescope 1, and the displacement $L_1$ scanned by the ranging light at the flagstick 2 within the time $t_0$ obtained in step S230, the first magnetic declination offset angle $\theta_1$ generated by the laser rangefinder telescope 1 during the rotating for ranging is calculated using the tangent triangle function calculation formula (4).

$$\theta_1=\tan^{-1}(L_1/L_0) \qquad (4)$$

S250, according to the first magnetic declination offset angle, the magnetic declination of the flagstick is corrected to obtain the first corrected magnetic declination.

nation.

Based on the distance $L_1$ between the laser rangefinder telescope 1 and the flagstick 2 and the rotation angular velocity $\omega$ of the laser rangefinder telescope 1, the first magnetic declination offset angle $\theta_1$ is obtained; and in combination with the first magnetic declination correction formula (5) below, the magnetic declination $A_0$ of the flagstick 2 obtained at the same moment as obtaining the distance by the laser rangefinder telescope 1 is corrected to obtain the first corrected magnetic declination $A_1$.

$$A_1=A_0-\theta_1 \qquad (5)$$

S300, according to the rotation information of the laser rangefinder telescope 1 in combination with a preset linear model of rotation acceleration versus magnetic declination offset angle, the magnetic declination of the flagstick 2 is corrected to obtain a second corrected magnetic declination.

In the embodiment, before step S300, the method further includes the following steps F310-F320.

F310, a test database is established to store multiple measurement data of the laser rangefinder telescope 1 at a same geographical location under a rotating condition and a non-rotating condition, where the multiple measurement data include: first magnetic declinations obtained when obtaining a distance to the flagstick 2 by the laser rangefinder telescope 1 of which a ranging light is aligned with the flagstick 2 and not rotated, and multiple second magnetic declinations obtained when obtaining distances to the flagstick 2 by the laser rangefinder telescope 1 at different rotation accelerations and a same rotation time.

F320, a difference between the first magnetic declination and the second magnetic declination at each of the different rotation accelerations within the same rotation time is calculated to obtain magnetic declination offset angles, linear fitting is performed on the magnetic declination offset angles and corresponding ones of the different rotation accelerations to obtain the preset linear model of rotation acceleration versus magnetic declination offset angle.

A mathematical expression for the preset linear model of rotation accelerations versus magnetic declination offset angle is as follows:

$$\theta_2=0.2\int a(t)dt+0.15 \qquad (6)$$

where $\theta_2$ represents the magnetic declination offset angle, $a$ represents the rotation accelerations, and t represents the same rotation time.

In the embodiment, step S300 may further include the following sub-steps S310-S340.

S310, the magnetic declination of the flagstick at the moment of obtaining the distance is acquired.

S320, according to rotation time information of the rotation information, a corresponding linear equation is called from the preset linear model of rotation acceleration versus magnetic declination offset angle.

S330, according to the rotation acceleration of the rotation information and the corresponding linear equation, a second magnetic declination offset angle generated by the laser rangefinder telescope 1 during rotating for ranging is obtained.

S340, according to a rotation direction of the laser rangefinder telescope 1 and the second magnetic declination offset angle, the magnetic declination of the flagstick 2 is corrected to obtain the second corrected magnetic declination.

Based on the rotation angular velocity of the laser rangefinder telescope 1 and the linear model of rotation angular velocity versus magnetic declination offset angle, the second magnetic declination offset angle $\theta_2$ is obtained; and in combination with the rotation direction of the laser rangefinder telescope 1 and the second magnetic declination correction formula (7) below, the magnetic declination $A_0$ obtained at the same moment of obtaining the distance is adjusted to obtain the second corrected magnetic declination $A_2$.

$$A_2 = A_0 \pm \theta_2 \qquad (7)$$

S400, according to the position information of the laser rangefinder telescope 1, the distance, the first corrected magnetic declination and the second corrected magnetic declination, a positioning analysis is performed on the flagstick 2 to obtain position information of the flagstick 2.

In the embodiment, step S400 may further include the following sub-steps S410-S420.

S410, mean calculation is performed on the first corrected magnetic declination and the second corrected magnetic declination is calculated to obtain an optimal magnetic declination of the flagstick 2.

S420, according to the optimal magnetic declination of the flagstick 2, the distance and the position information of the laser rangefinder telescope 1, and in combination with a flagstick position calculation formula, the position information of the flagstick 2 is obtained.

The flagstick position calculation formula is as follows:

$$\begin{cases} X = \dfrac{L_0 * \sin A * 360°}{2\pi * ARC * \cos Y_0} + X_0 \\ Y = \dfrac{L_0 * \cos A * 360°}{2\pi * ARC} + Y_0 \end{cases} \qquad (8)$$

where X represents a longitude value of the flagstick 2, Y represents a latitude value of the flagstick 2, $X_0$ represents a longitude value of the laser rangefinder telescope 1, $Y_0$ represents a latitude value of the laser rangefinder telescope 1, $L_0$ represents the distance between the laser rangefinder telescope 1 and the flagstick 2, A represents the optimal magnetic declination of the flagstick 2, and ARC represents an earth radius.

In addition, the embodiment further proposes a system for flagstick positioning based on the laser rangefinder telescope 1. The system includes: a data acquisition module, a first magnetic declination correction module, a second magnetic declination correction module, and a flagstick positioning module.

The data acquisition module is configured to obtain, in response to the laser rangefinder telescope 1 is rotated such that the ranging light emitted by the laser rangefinder telescope 1 is aligned with a flagstick 2, the rotation information and the position information of the laser rangefinder telescope 1, and analyze the ranging light to obtain the distance between the laser rangefinder telescope 1 and the flagstick 2.

The first magnetic declination correction module is configured to correct, according to the rotation information of the laser rangefinder telescope 1 and the distance, a magnetic declination of the flagstick 2 obtained at a same moment of obtaining the distance to obtain the first corrected magnetic declination.

The second magnetic declination correction module is configured to correct, according to the rotation information of the laser rangefinder telescope 1 in combination with the preset linear model of rotation acceleration versus magnetic declination offset angle, the magnetic declination of the flagstick 2 to obtain the second corrected magnetic declination.

The flagstick positioning module is configured to perform, according to the position information of the laser rangefinder telescope 1, the distance, the first corrected magnetic declination and the second corrected magnetic declination, the positioning analysis on the flagstick 2 to obtain the position information of the flagstick 2.

Furthermore, the embodiment proposes a flagstick positioning device, including: a rotation bracket, the laser rangefinder telescope 1, and a controller. The laser rangefinder telescope 1 is mounted on the rotation bracket. The rotation bracket is configured to drive the laser rangefinder telescope 1 to rotate. The controller is connected to the rotation bracket and the laser rangefinder telescope 1, and is configured to perform the method for flagstick positioning based on the laser rangefinder telescope 1.

In an embodiment, the laser rangefinder telescope includes: a locator, a geomagnetic module, a gyroscope, an accelerometer, a timer, and a laser rangefinder. The locator is configured to measure the position information of the laser rangefinder telescope 1. The geomagnetic module is configured to measure the magnetic declination of the flagstick 2. The gyroscope is configured to measure a rotation angular velocity of the laser rangefinder telescope 1. The accelerometer is configured to measure a rotation acceleration of the laser rangefinder telescope 1. The timer is configured to collect a rotation time of the laser rangefinder telescope 1. The laser rangefinder is configured to emit and receive the ranging light to measure the distance between the laser rangefinder telescope 1 and the flagstick 2.

In summary, the method, the system and the device provided by the embodiment of the invention, by rotating the telescope 1 to capture the flagstick 2 and analyzing the flagstick position using ranging data, rotation velocity data, rotation acceleration data, position data, and magnetic declination data collected during the rotation, do not require map information for flagstick positioning. Controlling the laser rangefinder telescope 1 alone suffices to measure the distance between the flagstick 2 and the measurement point and to determine the flagstick position. This significantly reduces usage costs and makes the acquisition of positioning information more convenient. Moreover, the invention performs dual corrections on the magnetic declination of the flagstick 2 collected during the rotation of the laser rangefinder telescope 1, achieving maximum data synchronization between the magnetic declination and ranging data, thereby greatly enhancing the accuracy of flagstick positioning.

Since the system/device described in the above embodiments of the invention are the ones used to implement the method described in the above embodiments of the invention, those skilled in the art can understand the specific structure and variations of the system/device based on the described method. Therefore, further details will not be repeated here. Any system/device used to implement the method described in the above embodiments of the invention are within the scope of protection sought by the invention.

Those skilled in the art should understand that the embodiments of the invention may be provided as a method, a system, or a computer program product. Therefore, the invention may take the form of an entirely hardware embodiment, an entirely software embodiment, or an embodiment combining both software and hardware aspects. Moreover, the invention may also take the form of a computer program product implemented on one or more computer-readable storage media (including but not limited to disk storage, compact disc read-only memory (CD-ROM), optical memory, etc.) that contain computer-available program code.

The invention is described with reference to flowcharts and/or block diagrams of methods, devices (systems), and computer program products according to the embodiments of the invention. It should be understood that each process and/or block in the flowcharts and/or block diagrams, as well as combinations of processes and/or blocks in the flowcharts and/or block diagrams, can be implemented by computer program instructions.

It should be noted that the use of the terms "a" or "one" preceding an element does not preclude the existence of multiple such elements. The invention can be implemented using hardware including several distinct components, as well as through a suitably programmed computer. Among the several devices listed, some may be embodied by the same hardware. The use of terms such as first, second, third, etc., is merely for convenience of expression and does not denote any order. These terms should be understood as part of the component names.

In addition, it should be noted that in the description of this specification, the terms "one embodiment", "some embodiments", "embodiments", "examples", "specific examples" or "some examples" refer to the specific features, structures, materials or characteristics described in conjunction with the embodiments or examples included in at least one embodiment or example of the invention. In this specification, the schematic expressions of the above terms do not necessarily refer to the same embodiments or examples. Moreover, the specific features, structures, materials, or characteristics described can be combined in any one or more embodiments or examples in an appropriate manner. In addition, those skilled in the art can combine and combine the different embodiments or examples described in this specification, as well as the features of different embodiments or examples, without conflicting with each other.

Although the exemplary embodiments of the invention have been described, those skilled in the art may make additional changes and modifications to these embodiments upon learning the basic inventive concept. Therefore, the technical solution should be interpreted as including the exemplary embodiments and all changes and modifications falling within the scope of the invention.

Apparently, those skilled in the art can make various modifications and variations to the invention without departing from the spirit and scope of the invention. In this way, if these modifications and variations of the invention fall within the scope of the technical solution of the invention and its equivalent technologies, the invention should also include these modifications and variations.

## Claims

1. A method for flagstick positioning based on a laser rangefinder telescope, comprising:

   obtaining, in response to the laser rangefinder telescope is rotated such that a ranging light emitted by the laser rangefinder telescope is aligned with a flagstick, rotation information and position information of the laser rangefinder telescope, and analyzing the ranging light to obtain a distance between the laser rangefinder telescope and the flagstick;
   correcting, according to the rotation information of the laser rangefinder telescope and the distance, a magnetic declination of the flagstick obtained at a same moment of obtaining the distance to thereby obtain a first corrected magnetic declination;

correcting, according to the rotation information of the laser rangefinder telescope in combination with a preset linear model of rotation acceleration versus magnetic declination offset angle, the magnetic declination of the flagstick to thereby obtain a second corrected magnetic declination; and

performing, according to the position information of the laser rangefinder telescope, the distance, the first corrected magnetic declination and the second corrected magnetic declination, a positioning analysis on the flagstick to thereby obtain position information of the flagstick.

2. The method as claimed in claim 1, wherein the obtaining, in response to the laser rangefinder telescope is rotated such that a ranging light emitted by the laser rangefinder telescope is aligned with a flagstick, rotation information and position information of the laser rangefinder telescope, and the analyzing the ranging light to obtain a distance between the laser rangefinder telescope and the flagstick specifically comprise:

obtaining the rotation information comprising a rotation time, a rotation angular velocity and a rotation acceleration, and the position information of the laser rangefinder telescope, in response to the laser rangefinder telescope is rotated such that the ranging light emitted by the laser rangefinder telescope is aligned with the flagstick;

obtaining ranging data fed back by the ranging light at each of moments during rotating of the laser rangefinder telescope; and

determining, in response to a difference between the ranging data at adjacent two of the moments is greater than a preset threshold, the ranging data at a latter moment of the adjacent two of the moments as the distance between the laser rangefinder telescope and the flagstick.

3. The method as claimed in claim 2, wherein the determining, in response to a difference between the ranging data at adjacent two of the moments is greater than a preset threshold, the ranging data at a latter moment of the adjacent two of the moments as the distance between the laser rangefinder telescope and the flagstick specifically comprises:

judging whether the difference between the ranging data at the adjacent two of the moments is greater than the preset threshold; and

outputting a prompt signal indicating the laser rangefinder telescope continues rotating, when the difference between the ranging data at the adjacent two of the moments is not greater than the preset threshold,

determining the ranging data at the latter moment as the distance between the laser rangefinder telescope and the flagstick and outputting a prompt signal indicating the laser rangefinder telescope stops rotating, when the difference between the ranging data at the adjacent two of the moments is greater than the preset threshold.

4. The method as claimed in claim 1, wherein the correcting, according to the rotation information of the laser rangefinder telescope and the distance, a magnetic declination of the flagstick obtained at a same moment of obtaining the distance to thereby obtain a first corrected magnetic declination, specifically comprises:

obtaining the magnetic declination of the flagstick at the same moment of obtaining the distance by the laser rangefinder telescope;

performing linear velocity calculation according to the distance and a rotation angular velocity of the rotation information of the laser rangefinder telescope, to obtain a linear velocity of the ranging light at the flagstick;

performing displacement calculation according to the linear velocity, and time information of the laser rangefinder telescope obtaining the distance, to obtain a displacement of the ranging light scanned at the flagstick during a time period corresponding to the time information;

obtaining, according to the displacement of the ranging light and the distance, in combination with a tangent triangle function calculation formula, a first magnetic declination offset angle generated by the laser rangefinder telescope during rotating for ranging; and

correcting, according to the first magnetic declination offset angle, the magnetic declination of the flagstick to obtain the first corrected magnetic declination.

5. The method as claimed in claim 1, before the correcting, according to the rotation information of the laser rangefinder telescope in combination with a preset linear model of rotation acceleration versus magnetic declination offset angle, the magnetic declination of the flagstick to thereby obtain a second corrected magnetic declination, further comprising:

establishing a test database to store a plurality of measurement data of the laser rangefinder telescope at a same geographical location under a rotating condition and a non-rotating condition, wherein the plurality of measurement data comprise: a first magnetic declination obtained when obtaining a distance to the flagstick by the laser rangefinder telescope of which a ranging light is aligned with the flagstick and not rotated, and a plurality of second magnetic declinations obtained when obtaining distances to the flagstick by the laser rangefinder telescope at different rotation accelerations and a same rotation time; and

calculating a difference between the first magnetic declination and the second magnetic declination at each of the different rotation accelerations within the same rotation time to thereby obtain magnetic declination offset angles, performing linear fitting on the magnetic declination offset angles and corresponding ones of the different rotation accelerations to obtain the preset linear model of rotation acceleration versus magnetic declination offset angle;

wherein a mathematical expression for the preset linear model of rotation acceleration versus magnetic declination offset angle is as follows:

$$\theta_2 = 0.2 \int a(t)dt + 0.15$$

where $\theta_2$ represents the magnetic declination offset angle, $a$ represents the rotation acceleration of the laser rangefinder telescope, and t represents the same rotation time.

6. The method as claimed in claim 1, wherein the correcting, according to the rotation information of the laser rangefinder telescope in combination with a preset linear model of rotation acceleration versus magnetic declination offset angle, the magnetic declination of the flagstick to thereby obtain a second corrected magnetic declination, specifically comprises:

acquiring the magnetic declination of the flagstick at the same moment of obtaining the distance by the laser rangefinder telescope;

calling, according to rotation time information of the rotation information, a corresponding linear equation from the preset linear model of rotation acceleration versus magnetic declination offset angle;

calculating, according to a rotation acceleration of the rotation information and the corresponding linear equation, a second magnetic declination offset angle generated by the laser rangefinder telescope during rotating for ranging; and

correcting, according to a rotation direction of the laser rangefinder telescope and the second magnetic declination offset angle, the magnetic declination of the flagstick to obtain the second corrected magnetic declination.

7. The method as claimed in claim 1, wherein the performing, according to the position information of the laser rangefinder telescope, the distance, the first corrected magnetic declination and the second corrected magnetic declination, a positioning analysis on the flagstick to thereby obtain position information of the flagstick specifically comprises:

performing mean calculation on the first corrected magnetic declination and the second corrected magnetic declination to obtain an optimal magnetic declination of the flagstick;

obtaining, according to the optimal magnetic declination of the flagstick, the distance, and the position information of the laser rangefinder telescope, in combination with a flagstick position calculation formula, the position information of the flagstick;

wherein the flagstick position calculation formula is as follows:

$$\begin{cases} X = \dfrac{L_0 * \sin A * 360°}{2\pi * ARC * \cos Y_0} + X_0 \\ Y = \dfrac{L_0 * \cos A * 360°}{2\pi * ARC} + Y_0 \end{cases}$$

where X represents a longitude value of the flagstick, Y represents a latitude value of the flagstick, $X_0$ represents a longitude value of the laser rangefinder telescope, $Y_0$ represents a latitude value of the laser rangefinder telescope, $L_0$ represents the distance between the laser rangefinder telescope and the flagstick, A represents the optimal magnetic declination of the flagstick, and ARC represents an earth radius.

8. The method as claimed in claim 2, wherein the preset threshold is 5 meters.

9. The method as claimed in claim 1, wherein the obtaining, in response to the laser rangefinder telescope is rotated such that a ranging light emitted by the laser rangefinder telescope is aligned with a flagstick, rotation information and position information of the laser rangefinder telescope, and the analyzing the ranging light to obtain a distance between the laser rangefinder telescope and the flagstick specifically comprise:

obtaining the rotation information comprising a rotation time, a rotation angular velocity and a rotation acceleration, and the position information of the laser rangefinder telescope, in response to the laser rangefinder telescope is rotated such that the ranging light emitted by the laser rangefinder telescope is aligned with the flagstick;

obtaining ranging data fed back by the ranging light at each of moments during rotating of the laser rangefinder telescope; and

determining, in response to ranging data at adjacent two of the moments changes from invalid to valid, the ranging data at a latter moment of the adjacent two of the moments as the distance between the laser rangefinder telescope and the flagstick.

10. The method as claimed in claim 3, wherein the prompt signal is a flashing signal light or valid ranging data displayed in a lens of the laser rangefinder telescope.

11. The method as claimed in claim 4, wherein the first magnetic declination offset angle is obtained through the following formula:

$$\theta_1 = \tan^{-1}(L_1/L_0)$$

where $\theta_1$ represents the first magnetic declination offset angle, and $L_1$ represents the displacement of the ranging light.

12. The method as claimed in claim 4, wherein the first corrected magnetic declination is obtained through the following formula:

$$A_1 = A_0 - \theta_1$$

where $A_1$ represents the first corrected magnetic declination, and $A_0$ represents the magnetic declination of the flagstick.

13. A system for flagstick positioning based on a laser rangefinder telescope, comprising:

a data acquisition module, configured to obtain, in response to the laser rangefinder telescope is rotated such that a ranging light emitted by the laser rangefinder telescope is aligned with a flagstick, rotation information and position information of the laser rangefinder telescope, and analyze the ranging light to obtain a distance between the laser rangefinder telescope and the flagstick;

a first magnetic declination correction module, configured to correct, according to the rotation information of the laser rangefinder telescope and the distance, a magnetic declination of the flagstick obtained at a same moment of obtaining the distance to thereby obtain a first corrected magnetic declination;

a second magnetic declination correction module, configured to correct, according to the rotation information of the laser rangefinder telescope in combination with a preset linear model of rotation acceleration versus magnetic declination offset angle, the magnetic declination of the flagstick to thereby obtain a second corrected magnetic declination; and

a flagstick positioning module, configured to perform, according to the position information of the laser rangefinder telescope, the distance, the first corrected magnetic declination and the second corrected magnetic declination, a positioning analysis on the flagstick to thereby obtain position information of the flagstick.

14. A flagstick positioning device, comprising:

a rotation bracket;

a laser rangefinder telescope, mounted on the rotation bracket, wherein the rotation bracket is configured to drive the laser rangefinder telescope to rotate; and

a controller, connected to the rotation bracket and the laser rangefinder telescope, wherein the controller is configured to perform the method for flagstick positioning based on the laser rangefinder telescope as claimed in any one of claims 1-12.

15. The flagstick positioning device as claimed in claim 14, wherein the laser rangefinder telescope comprises:

a locator, configured to measure the position information of the laser rangefinder telescope;

a geomagnetic module, configured to measure the magnetic declination of the flagstick;

a gyroscope, configured to measure a rotation angular velocity of the laser rangefinder telescope;

an accelerometer, configured to measure a rotation acceleration of the laser rangefinder telescope;

a timer, configured to collect a rotation time of the laser rangefinder telescope; and

a laser rangefinder, configured to emit and receive the ranging light to measure the distance between the laser rangefinder telescope and the flagstick.

| | |
|---|---|
| rotation information and position information of the laser rangefinder telescope are obtained in response to the laser rangefinder telescope is rotated such that a ranging light emitted by the laser rangefinder telescope is aligned with a flagstick, and the ranging light is analyzed to obtain a distance between the laser rangefinder telescope and the flagstick | S100 |

| | |
|---|---|
| according to the rotation information of the laser rangefinder telescope and the distance, a magnetic declination of the flagstick obtained at a same moment of obtaining the distance is corrected to obtain a first corrected magnetic declination | S200 |

| | |
|---|---|
| according to the rotation information of the laser rangefinder telescope in combination with a preset linear model of rotation acceleration versus magnetic declination offset angle, the magnetic declination of the flagstick is corrected to obtain a second corrected magnetic declination | S300 |

| | |
|---|---|
| according to the position information of the laser rangefinder telescope, the distance, the first corrected magnetic declination and the second corrected magnetic declination, a positioning analysis is performed on the flagstick to obtain position information of the flagstick | S400 |

FIG. 1

FIG. 2

FIG. 3

FIG. 4

Europäisches
Patentamt

European
Patent Office

Office européen
des brevets

# EUROPEAN SEARCH REPORT

**Application Number**

EP 25 20 8525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/386544 A1 (BLAIR JOHN F [US] ET AL) 10 December 2020 (2020-12-10) * paragraphs [0003], [0004], [0055] - [0062], [0078] - [0096] * ----- | 1-15 | INV. G01S17/88 G01S17/08 G01S17/86 G01S7/48 |
| A | US 2017/354858 A1 (LEWIS ROBERT A [US] ET AL) 14 December 2017 (2017-12-14) * paragraphs [0048], [0052] - [0061], [0073] - [0090]; figures 1,3 * ----- | 1-15 | A63B57/00 G01C15/00 A63B69/36 G01C17/38 |

**TECHNICAL FIELDS SEARCHED (IPC)**

G01S
A63B
G01C

The present search report has been drawn up for all claims

| Place of search | Date of completion of the search | Examiner |
|---|---|---|
| Munich | 9 March 2026 | Grübl, Alexander |

## ANNEX TO THE EUROPEAN SEARCH REPORT
## ON EUROPEAN PATENT APPLICATION NO.

EP 25 20 8525

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2026

| Patent document cited in search report | Publication date | Patent family member(s) | | Publication date |
|---|---|---|---|---|
| US 2020386544 A1 | 10-12-2020 | NONE | | |
| US 2017354858 A1 | 14-12-2017 | US | 2017354858 A1 | 14-12-2017 |
| | | US | 2020238154 A1 | 30-07-2020 |
| | | US | 2023356060 A1 | 09-11-2023 |

EPO FORM P0459

For more details about this annex : see Official Journal of the European Patent Office, No. 12/82